## Europäisches Patentamt

**European Patent Office**

**Office européen des brevets**

(11) Publication number: **0 044 617**
**B1**

## EUROPEAN PATENT SPECIFICATION

(45) Date of publication of patent specification: **28.11.84**

(51) Int. Cl.³: **B 31 F 1/20,** B 32 B 27/08

(21) Application number: **81302706.7**

(22) Date of filing: **16.06.81**

(54) **Process for the preparation of cardboard of the corrugated type.**

(30) Priority: **02.07.80 IT 2318180**

(43) Date of publication of application:
**27.01.82 Bulletin 82/04**

(45) Publication of the grant of the patent:
**28.11.84 Bulletin 84/48**

(84) Designated Contracting States:
**BE DE FR GB NL SE**

(56) References cited:
**BE-A- 734 484**
**DE-A-2 820 171**
**FR-A-2 360 420**
**GB-A-1 481 050**
**GB-A-1 501 027**
**GB-A-2 004 810**
**US-A-3 307 994**

**PATENTS ABSTRACTS OF JAPAN, vol. 4, no. 88, June 24, 1980, page (M-17) (570)**

(73) Proprietor: **Montedison S.p.A.**
**Patents & Licensing Dept. Foro Buonaparte, 31**
**P.O. Box 10528**
**I-20121 Milan (IT)**
(73) Proprietor: **CARTOPIAVE S.p.A.**
**52, Via 4 Novembre**
**Susegana (Treviso) (IT)**

(72) Inventor: **Credali, Lino**
**22, Via Calari**
**Casalecchio di Reno Bologna (IT)**
Inventor: **Martini, Emilio**
**82, Via Altopiano**
**Pontecchio Marconi Bologna (IT)**
Inventor: **Lori, Domenico**
**15, Via Agnelli**
**Ferrara (IT)**

(74) Representative: **Whalley, Kevin et al**
**Marks & Clerk 57/60 Lincoln's Inn Fields**
**London WC2A 3LS (GB)**

## Description

The present invention relates to a process for the preparation of cardboard of the corrugated type, having a high resistance to humidity, using fibres of thermoplastic synthetic polymers.

According to a known process which is described in Italian Patent Application IT—A—23339 A/77, it is possible to obtain a cardboard of the above indicated type using as the paper forming the liners (or flat covers) and the corrugated medium (or wavy element) sheets of thermoplastic synthetic fibres or mixtures of cellulose fibres with such thermoplastic fibres. Such sheets may be thermo-treated in order to melt at least part of the thermoplastic fibres.

The heat or thermo-treatment may be carried out in the absence of pressure, for instance in a warm air tunnel or by means of infrared lamps, and optionally followed by a compression; or the heat-treatment may be conducted under simultaneous pressure, operating for instance on roller calenders, the pressure being applied by one of the rollers or cylinders, or in discontinuous plate presses, or on continuous band presses, with pressure values of at least 0.1 kg/cm in roller calenders, and of at least 0.1 kg/cm² in plate or band presses.

When the sheets are used for producing the corrugated medium of the cardboard, they are heat-formed on special embossed or grooved heated cylinders which form the so-called "corrugating group", well known to those skilled in the manufacture of corrugated cardboard, also of the conventional type.

The cylinders or rollers of the corrugating group in general operate at a temperature greater than that at which the thermoplastic polymer constituting the synthetic fibres present in the sheet becomes plastic or softens, as a result of which the sheets may acquire in a permanent way the required undulated or corrugated structure.

In general, the first of the liners that form the corrugated cardboard is welded to the tips of the corrugated medium in the corrugating group itself by thermo-melting of the thermoplastic fibres contained in it, while the second liner is welded to the opposite tips of the corrugated medium in a separate operation.

The thermo-welding and the heat-treatment of the sheets, in particular of the sheet that forms the corrugated medium, with the consequential melting of the thermoplastic fibres present in it, permit a cardboard of the undulated or corrugated type to be obtained having good mechanical properties under high humidity.

However, in realizing such a process there occur considerable practical difficulties in the thermo-welding of the second liner onto the corrugated medium, after the first liner has been welded onto it.

In fact, the thermo-welding of the second liner to the tips of the corrugated medium must necessarily be carried out, instead of at the corrugating group, at the so-called "hot plates" where the corrugated medium, at the required welding temperature, which in general is 20°—30°C higher than that necessary for melting the thermoplastic polymer present, and under the minimal pressure required (about 40 g/sq.cm), tends to collapse and thus to become permanently warped.

British Patent Specification No. GB—A—1 481 050 relates to the manufacture of corrugated cardboard wherein at least the corrugated medium or the liner is constructed from paper, with the characteristic that a film of molten thermoplastic polymer is applied between the facing surfaces of such medium and liner, and pressure is then exerted on the liner against the medium to bond them to each other. A pressure in the range of from 10 to 50 kg/cm is used to this aim. Such a method is said to have the advantage of not requiring any heating of the adhesive, thus allowing the conventional heating plates to be omitted and the whole process to be carried out in a single corrugating machine. In this method at least the corrugated medium and the liner consists of conventional cellulose paper, and the bonding polymer is applied in the molten state. These conditions, and particularly the first one, require the use of great bonding pressure which preclude the possibility of operating at the conventional heating plates, wherein, in that event, the corrugated medium would collapse.

In the evaluation of the prior art as contained in the British Patent Specification No. GB—A—1 481 050, there is described a corrugated cardboard sheet which comprises a corrugated core sheet and one or more flat face sheets both of which are made of plastics, the plastics core sheet being adhesively bonded to one of the respective plastics flat sheets with a plastics resin polymer having a melting point at least 10°C lower than the melting point of the plastic polymer comprising the core sheet and that of the flat sheets, thus providing a corrugated cardboard structure free of "warp" and "crookedness". While a plastics cardboard sheet of this type provides better resistance to water, this plastics cardboard sheet does not provide to a sufficient degree the requisite properties of a packaging material such as good cushioning, rigidity, compression strength, burst strength, printability and processing property, as does a corrugated cardboard sheet using paper and is also too expensive to be a substitute for paper cardboard.

French Specification No. FR—A—2 360 420 describes the manufacture of corrugated cardboard comprising the operation of bonding an ornamental sheet to the surface of the corrugated medium, by interposing between the sheet and medium a film of a thermoplastic polymer, then tightening the thus obtained assembly between heated tightening elements under pressure in order to melt the thermoplastic polymer and to promote adhesion, and finally letting the assembly cool. The corrugated medium may consist either of cellulose paper or of a thermoplastic polymer material. In the former

# 0 044 617

case, the bonding of the liners to the tips of the corrugated medium is said to be accomplished by means of a heat-melting adhesive material, in the form of a thin film interposed between such medium and liners; in the latter case, bonding is said to be carried out by simply melting the tips of the corrugated medium into contact with the liner surface, without the aid of any other adhesive material.

The use of a thermoplastic polymer film is recommended in this reference only to achieve adhesion between the whole surface of the corrugated medium and that of an ornamental sheet. Such adhesion is obtained by the use of a remarkable pressure between the surfaces to be adhered.

The present invention provides a process for the preparation of cardboard of the corrugated type, using paper containing thermoplastic synthetic fibres, which comprises effecting thermo-adhesion of:

(a) at least one corrugated medium comprising, at each outer layer intended for adhesion, a sheet of fibrous material formed of synthetic fibres of at least one thermoplastic polymer, or of a mixture of such fibres containing up to 95% by weight of cellulose fibres, at least part of the said fibres being in the fusion-bonded state; and

(b) at least one liner comprising, at least at the outer layer intended for adhesion to the tips of the corrugated medium, a sheet of fibrous material formed of synthetic fibres of at least one thermoplastic polymer, or of a mixture of such fibres containing up to 95% by weight of cellulose fibres;

wherein the thermo-adhesion is carried out by interposing between the tips of the corrugated medium and the surface of the liner to be adhered a film of at least one synthetic thermoplastic polymer having the following characteristics:

(a) a melting temperature lower than the melting temperature of the at least one thermoplastic polymer or of the mixture of thermoplastic polymers constituting the synthetic fibres present both in the liner and in the corrugated medium (hereinafter referred to as "the thermoplastic polymer" constituting the synthetic fibres present in the liner and in the corrugated medium);

(b) a viscosity in the molten state of less than $1 \times 10^8$ poises, measured in a capillary viscosimeter, at a velocity gradient less than or equal to $10^{-1}$ seconds, and at a temperature of from a temperature exceeding by 10°C the melting temperature of such polymer to a temperature exceeding by 20°C the melting temperature of the thermoplastic polymer constituting the synthetic fibres present both in the liner and in the corrugated medium;

(c) a surface tension not exceeding by more than 5 dynes/cm the surface tension of the thermoplastic polymer constituting the synthetic fibres present both in the liner and in the corrugated medium, measured at the same temperature;

(d) a solubility parameter measured at a temperature of 25°C which is in a ratio to the solubility parameter of the thermoplastic polymer constituting the synthetic fibres present both in the liner and in the corrugated medium of from 0.85:1 to 1.15:1, extremes included; and

wherein the assembly thus obtained, at least in correspondence with the point of contact of the liner with the tips of the corrugated medium, is heated at a temperature of from a temperature exceeding by 10°C the melting temperature of the thermoplastic polymer constituting the film to a temperature exceeding by 20°C the melting temperature of the thermoplastic polymer constituting the synthetic fibres present both in the liner and in the corrugated medium.

It has thus now been found that it is possible to achieve the thermo-welding of the liner to the tips of the corrugated medium operating on the hot plates without the drawback previously described if there is interposed between the tips of the corrugated medium and the liner a thermoplastic synthetic polymer film having the following characteristics:

(a) a melting temperature lower than the melting temperature of the thermoplastic polymer constituting the synthetic fibres present in the liner and in the corrugated medium;

(b) a viscosity in the molten state, measured in a capillary viscosimeter, at a velocity gradient equal to or less than $10^{-1}$ seconds, at a temperature of from a temperature exceeding by 10°C the melting temperature of such polymer to a temperature exceeding by 20°C the melting temperature of the thermoplastic fibres present in the liner and in the corrugated medium, of less than $1 \times 10^8$ poises, preferably less than $1 \times 10^5$ poises;

(c) a surface tension not exceeding by more than 5 dynes/cm that of the polymer constituting the thermoplastic fibres present in the liner and in the corrugated medium, measured at the same temperature; and

(d) a solubility parameter which is in a ratio to the solubility parameter of the polymer constituting the thermoplastic fibres present in the liner and in the corrugated medium of from 0.85:1 to 1.15:1, extremes included, such parameters being measured at 25°C.

By interposing such a film it is possible to obtain the adhesion between the sheet and the corrugated medium by operating at lower temperatures than those previously required, in particular at

3

those ranging from a temperature exceeding by 10°C the melting temperature of the polymer constituting the film to a temperature exceeding by 20°C the melting temperature of the polymer constituting the fibres present in the liner and in the corrugated medium.

In this way the above-mentioned drawbacks are greatly reduced or completely avoided.

In particular it is possible, and even preferable, to operate from a temperature exceeding by 10°C the melting temperature of the polymer constituting the film to a temperature equal to the melting temperature of the polymer constituting the fibres, when the melting temperature of the polymer constituting the film is lower by at least 10°C than the melting temperature of the polymer constituting the fibres.

For instance, when operating in the presence of a high density polyethylene film having a melting temperature of 135°C, and using polypropylene fibres having a melting temperature of 165°C, the adhesion may be effected at 145° to 165°C.

With temperature values within this preferred range it is possible to achieve the adhesion even at temperatures below the melting temperatures of the thermoplastic fibres, without destroying their morphology.

As to the fibrous material present in the sheets that constitute the liner and the corrugated medium it may consist only of synthetic fibres of at least one thermoplastic polymer, or of a mixture of such fibres with up to 95% by weight of cellulose fibres, referred to the total mixture of fibres.

Mineral fillers, pigments and the additives commonly used in conventional cellulose papers may be present in the sheets, admixed with the aforesaid fibrous material.

The sheets that constitute the liner and the corrugated medium may be of the elementary or monolayer type, that is they consist of a single homogeneous layer of the fibrous material having the above defined composition, or of the multi-layer type, that is they consist of a plurality of layers of fibrous material of different composition. In the latter case, it is understood that at least one of the external layers forming such sheets, and particularly a layer that constitutes a face of the sheet to be made to adhere, shall have the above defined composition and that on this layer will be deposited the thermoplastic film.

In order to distinguish this layer from other layers, such a layer will be referred to as the layer intended for the adhesion.

Thus, in referring the characteristics (a) to (d) of the polymer constituting the film to the thermoplastic synthetic fibres present in the liners and in the corrugated medium, by such fibres are meant those present in the liners and corrugated medium when they consist of mono-layer sheets, and only those present in the layers intended for adhesion when the liners and the corrugated medium are formed by multi-layer sheets.

The remaining layers that form such structures, not being directly involved in the adhesion process, may consist of cellulose fibres only, or of synthetic fibres alone, whether thermoplastic or not, or of a blend of such fibres in any proportion.

Natural fibres of a type different from the cellulosic type, for instance wool fibres, may also be present in the mono-layer sheets or in the multi-layer sheets, in substitution of not more than 50% by weight of the cellulose fibres.

At the moment of the thermo-adhesion, at least part of the thermoplastic fibres present in the sheet or in the layer intended for the adhesion, and constituting the corrugated medium, are in a fusion-bonded state as a consequence of the thermo-formation process used for the formation of the corrugated structure starting from a flat sheet and may be either in the solid condition or still in the fused condition.

The thermoplastic fibres present in the sheet or in the layer intended for the adhesion, and constituting the liner, may likewise, at least partially, be in a thermomolten state, following some preceding thermal treatment and/or a calendering of the sheets themselves, or they may remain unaltered, in which case they may or may not undergo a thermofusion during the dwell period of the liner between the hot plates or in the corrugating group during the thermo-welding to the tips of the corrugated medium.

Although the advantages derived from the interposition of the above defined thermoplastic film between the tips of the corrugated medium and the liner are obtained chiefly in the bonding operations of the liners carried out on the hot plates, it may be convenient to utilize the method also in the bonding of the liners with the corrugated medium effected on the corrugating group, feeding to this group, between the liner and the tips of the corrugated medium, a thermoplastic polymer film having the characteristics (a) to (d).

In these operations, the film is preferably pre-heated at a temperature near the temperature at which the thermoadhesion is to be effected, in such a way that it melts or softens and thus adheres to the liner face on which it has been deposited.

After having effected the thermoadhesion of the film to the tips of the corrugated medium, the fusion of the film may be completed, if necessary, during the passage of the assembly through the hot plates, during the course of the bonding operation of the second liner to the corrugated medium.

The advantage of applying the use of a polymeric film of the above indicated type and in the above indicated way also to the thermoadhesion of the corrugated medium with a liner in the corrugating group, also in this case will be that of enabling an operation at much lower temperatures than those so far required for such an operation.

Preparation of the sheets, whether mono- or multi-layer, can be effected according to conventional papermaking methods, starting from dispersions in water, or in another inert liquid of thermoplastic synthetic fibres or mixtures thereof with cellulose fibres, using for the purpose continuous flat or curved table machines. Aqueous suspensions containing from 0.7 to 1.5% by weight of fibrous material are preferably used.

As synthetic fibres constituting the whole or in part the sheets to be used in the process of the invention, it is possible to employ fibres of the conventional type in the form of staple but preferably use is made of fibrils or fibrids of thermoplastic synthetic polymers having a specific surface area of at least 1 $m^2/g$. Such fibrils or fibrids are products long known as substituents of cellulose in the preparation of paper or of related products. Generally their length ranges from 1 to 10 mm and their mean (apparent) diameter from 1 to 500 $\mu$.

The fibrils employable in the present process can be obtained according to any one of the several processes described in the literature. In this connection mention is made of the methods described in British Patent Specifications GB—A—868 651 and GB—A—1 287 917, and in German Patent Application DE—A—2 208 553, according to which the fibres in question, otherwise called "fibrids", are obtained by precipitation of polymers from their solutions, or during the polymerization of the polymers itself, operating in the presence of shearing stresses; and furthermore in British Patent Specifications GB—A—891 943 and GB—A—1 262 531, in US Patent Specifications US—A— 3 770 856, US—A—3 750 383 and US—A—3 808 091, in Belgian Patent Specification BE—A— 789 808, in French Patent Application FR—A—2 176 858 and in German Patent Application DE— A—2 343 543, according to which the aforesaid fibrils are obtained in the state of more or less coherent aggregates or of fibrilled filamentary structures (plexifilaments) by extruding through a spinneret, of solutions, emulsions or dispersions of the polymers in one or more liquid media, in conditions of nearly instantaneous evaporation of the existing liquid phase (flash-spinning processes). In such a case the fibrous aggregates or plexifilaments so obtained can be easily disaggregated into discontinuous or elementary fibrils, having a surface area of at least 1 $m^2/g$, by means of cutting and/or refining operations.

Other methods by which it is possible to obtain such fibrils directly are those described in Italian Patent IT—B—947 919 and in Italian Patent Application IT—A—29594 A/74, as well as in British Patent Specifications GB—A—1 355 912 and GB—A—1 355 913.

The thermoplastic fibres, and in particular such fibrils or fibrids, may contain incorporated therein inorganic fillers such as kaolin, talc and titanium dioxide, in amounts up to 70% by weight referred to the weight of the fibres thus filled.

Blends of such fibres with thermoplastic fibres of the conventional type may be used as well. As cellulose fibres it is possible to utilize all the ones usually employed for making papers of the conventional type.

The thermoplastic fibres present in the mono-layer sheets forming the liners and the corrugated medium, or in the layers intended for the adhesion when the liners and the corrugated medium are constituted of multi-layer sheets, may be made of the same polymer, or of polymers of a different nature, provided that the polymer constituting the film meets all the conditions from (a) to (d) defined hereinabove.

When the thermoplastic fibres present in the sheets or layers are blends of fibres of different polymers, the polymer constituting the film to be interposed between the sheets or layers must meet all the conditions from (a) to (d) defined hereinabove, in respect of at least one of the types of thermoplastic fibres which are present (or of the polymer forming such thermoplastic fibres).

In the case that the individual thermoplastic fibres should be made of a mixture of polymers instead of one type only of polymer what is specified at characteristics (a) to (d) about the melting temperatures, the surface tension values and the solubility parameters of the polymers constituting the fibres is to be understood as referred to the corresponding values exhibited by such a mixture of polymers.

The thermoplastic polymer constituting the film may be any film-forming thermoplastic polymer, preferably having a crystallinity of at least 20%, provided that it exhibits the characteristics (a) to (d) with respect to the thermoplastic polymer constituting the fibres present in the liner and in the corrugated medium.

Examples of polymers from which the film can be prepared are the olefinic polymers, such as polyethylene and polypropylene, the vinyl polymers, such as polyvinyl chloride, polyvinyl alcohol and polyvinyl acetate, polymethylmethacrylate, polyethylacrylate, polystyrene and furthermore the polyamides, polytetrafluoroethylene, the polyester resins, and mixtures of such polymers.

The melting temperatures of a polymer is assumed to be the temperature at which the disappearance of the last crystallite in the polymer is observed under an optical microscope.

The solubility parameter of a polymer is expressed by the square root of the ratio between the cohesion energy of the molecules and the molar volume, and is often used to determine the characteristics of compatibility of polymers and solvents.

5

General methods of such determination are described by J. Brandrup and E. H. Immergut in "Polymer Handbook", Intersc. Publisher, 1966, paragraph 4, pages 341 and following.

One particular determination method based on the principle of additivity of the contributions of the chemical groups, atoms and bonds present in the molecules to the total molar attraction forces was suggested and described by P. A. Small in Journal of Applied Chemistry 3, 77, 1953. There is reported hereinbelow the values of the solubility parameter at 25°C of some polymers, values calculated according to P. A. Small and which are referred to for the purpose of this invention.

| Polymer | Solubility parameter $\sqrt{cal/cc}$ |
|---|---|
| Polyvinyl acetate | 9.22 |
| Polymethylmethacrylate | 9.22 |
| Polyethylene | 8.05 |
| Polystyrene | 9.01 |
| Polypropylene | 9.2 |
| Polytetrafluoroethylene | 6.2 |
| Polyvinyl alcohol | 12.6 |
| Polyvinyl chloride | 10.2 |

The thermoplastic polymer film can be obtained according to any conventional method used for film-forming of the polymer such as extrusion or moulding.

The thickness of the film is not critical. However, films having a thickness not exceeding 150 $\mu$, and in particular of from 5 to 40 $\mu$, are preferable since they permit the preparation of bonded sheets with shorter dwell times at the operating temperature.

The synthetic fibres present in the liners and in the corrugated medium to be caused to adhere according to the process of the present invention are preferably prepared from thermoplastic polymers having at least 20% crystallinity, such as low or high density polyethylene, polypropylene essentially consisting of isotactic macromolecules, ethylene/propylene random or block copolymers, poly-4-methyl-1-pentene, polyamides, polyesters, polyacrylonitrile, polyurethanes, polycarbonates, vinyl resins, such as polyvinyl chloride and polyvinyl acetate, ethylene/vinylacetate copolymers, acrylic resins in general, and polyethers.

As previously specified, the temperature at which the thermo-adhesion between the liners and the corrugated medium is effected ranges from a temperature exceeding by 10°C the melting temperature of the polymer constituting the film to a temperature exceeding, at the most, by 20°C the melting temperature of the thermoplastic fibres present in the liners and in the corrugated medium, it being understood that such fibres, in the case that the liners and/or corrugated medium have a multi-layer structure, are the thermoplastic fibres present in the layers or sheets of those structures which are in contact with the film surface.

This temperature must be attained at least at the points at which the tips of the corrugated medium rest, through the interposed film, against the surface of the liner.

Preferably there is simultaneously applied a slight pressure in correspondence with those points, in general not exceeding 40 g/cm².

The actual temperature at which the heating is carried out is selected, within the defined range, from amongst those at which the polymer constituting the film assumes the previously defined values of viscosity (b) and surface tension (c), in case such values would not take place at all the heating temperatures comprised in the above-mentioned range.

In such a case the temperature at which thermoadhesion of bonding is achieved may be established on the basis of preliminary determinations of the viscosity and surface tension carried out on the polymer constituting the film.

The process of the present invention may be applied to the preparation of cardboard of the corrugated type having a plurality of corrugated media, in which process the thermo-adhesion of these latter to the liners by means of interposed thermoplastic polymeric films may be achieved either operating on the corrugating group or at the hot plates of the corrugating machine.

The invention will be further described, by way of example only, with reference to the accompanying drawings, in which Figures I, II and III respectively show schematically apparatus for carrying out various embodiments of the process according to the invention.

**0 044 617**

In Figure I there is shown apparatus for the preparation of corrugated cardboard, by thermo-heating a second linear at the hot plates of heating apparatus.

In this figure there are represented: sheets 1 and 2 which respectively form the first liner and the sheet intended for the formation by thermoforming of the corrugated medium on a corrugating group 3; the formed corrugated medium 8, made to adhere to the first liner by thermoadhesion carried out simultaneously with the thermoforming at the corrugating group; a sheet 4, which forms the second liner, fed to a heating section 6 of the hot plates of the heating apparatus; a polymeric film 5 fed between the tips of the corrugated medium and the surface of the second liner; and a cooling zone 7 of the hot plate heating apparatus.

In Figure II there is shown apparatus for the preparation of a double corrugated medium cardboard, by thermowelding of one part of the liners at the hot plates of heating apparatus.

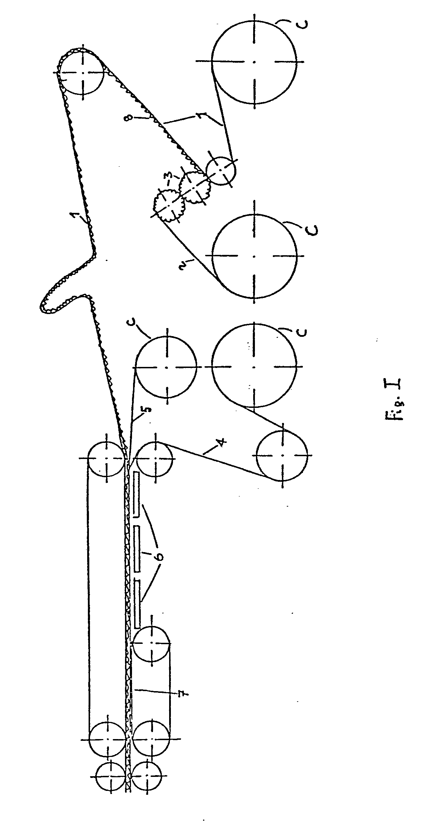

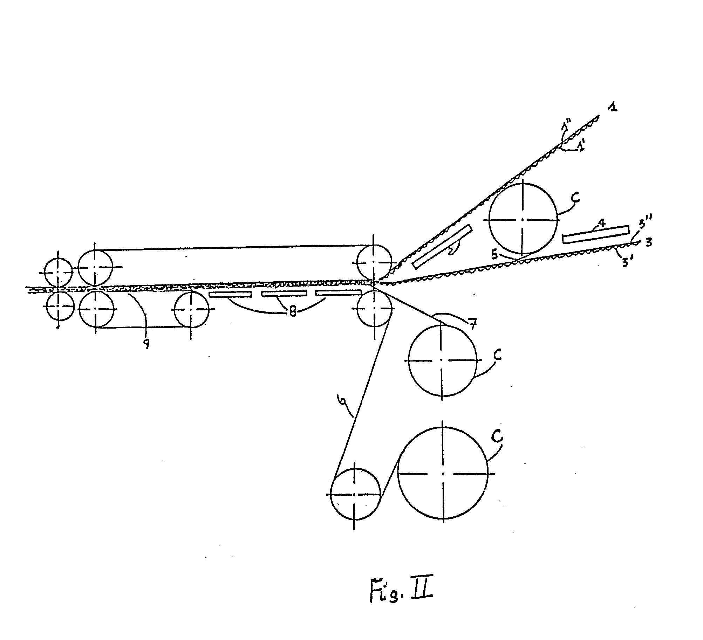

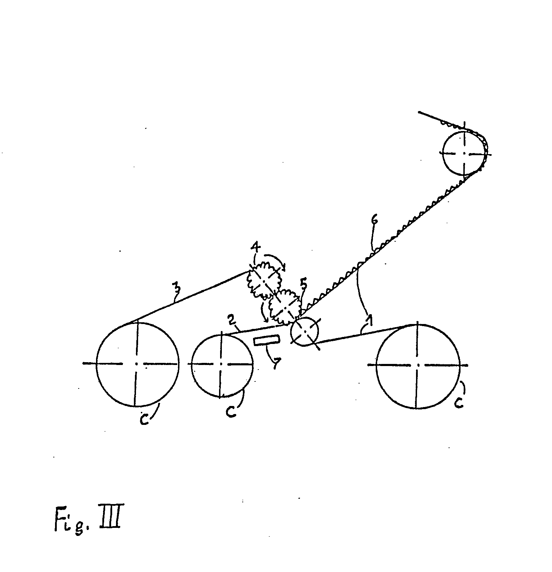

In this figure there are represented: an assembly 1 consisting of a corrugated medium 1' and a liner 1'' adhering to it, formed and coming from a first corrugating group (not represented in the figure) and then conveyed to the hot plates; an assembly 3 of a corrugated medium 3' and of a liner 3'' adhering to it, formed and coming from a second corrugating group (not represented) and fed to the hot plates; I.R. heating devices 2 and 4 for respectively heating the corrugated medium 1' and the liner 3''; a polymeric film 5 which is disposed onto the pre-heated surface of the liner 3''; a sheet 6 which forms the liner fed to the hot plates of the heating apparatus; a polymeric film 7 which is interposed between the sheet 6 and the corrugated medium 3'; a heating section 8 of the hot plates, where there occurs the adhesion of the liner 6 to the tips of the corrugated medium 3' and the adhesion of the liner 3'' to the tips of the corrugated medium 1'; and a cooling zone 9 of the hot plate heating apparatus.

In Figure III there is shown apparatus for the thermowelding of a liner to a corrugated medium in a corrugating unit.

In this figure there are represented: a sheet 1 which forms a liner; a sheet 3 intended for the formation of the corrugated medium in a corrugating unit; embossing rollers 4 and 5, which turn in the direction indicated by the arrows and which together form the corrugating unit; a polymeric film 2, which is inserted between the liner 1 and the tips of the corrugated medium on the roller 5; a preheater (I.R.) 7 of the polymeric film; and an assembly 6 comprising the corrugating medium thermowelded to the liner.

In each of the Figures I, II and III, the reference letter "C" indicates reels from which the above-mentioned sheets or films are respectively fed.

The invention will be further described with reference to the following illustrative Examples.

Example 1

By means of a flat three-jet paper machine there was prepared a three-layered paper which, after drying, exhibited the following characteristics:

| | |
|---|---|
| —overall weight | 220 g/sq.mt |
| —weight of the two outside layers | 60 g/sq.mt |
| —thickness of the outside layers | 98 $\mu$ |
| —composition of the outside layers:<br>unbleached conifer cellulose fibres; | 35% by weight |
| high-density polyethylene fibrils (having a melting temperature of 135°C) having a mean ponderal length of 3 mm, a mean (apparent) diameter of 16 $\mu$ and a specific surface area of 6 sq.mt/g, and having incorporated therein 30% by weight of kaolin powder; | 65% by weight |
| —weight of inner layer | 100 g/sq.mt |
| —thickness of inner layer | 100 $\mu$ |

—composition of inner layer: only unbleached conifer cellulose fibres.

By means of a second flat two-jet paper machine there was prepared a two layer paper which, after drying, exhibited the following characteristics:

| | |
|---|---|
| —overall weight | 180 g/sq.mt |
| —weight of 1st layer | 80 g/sq.mt |
| —thickness of 1st layer | 145 $\mu$ |

7

—composition of the 1st layer:

| | |
|---|---|
| unbleached conifer cellulose fibres; | 35% by weight |
| same polyethylene fibrils used for the three-layer paper described above; | 65% by weight |
| weight of 2nd layer: | 100 g/sq.mt |
| thickness of 2nd layer: | 160 $\mu$ |

—composition of 2nd layer: only unbleached conifer cellulose fibres.

The polyethylene fibrils were prepared by means of the process described in Italian Patent Specification IT—B—947 919, and were made dispersible in water by surface treatment with acetalized polyvinyl alcohol, as described in Italian Patent Specification IT—B—1 006 878.

The papers were obtained starting from dispersions in water containing about 1% by weight of fibrous material.

The three-layered paper described herein above was conveyed to a corrugating unit of the type "Wave A", which operated at a temperature of 180°C, and where the three-layered paper was thermoformed into a corrugated sheet. At the same time, to the corrugating unit there was also conveyed a sheet of the two-jet paper described above (first liner) arranged in such a way as to contact the tips of the three-jet paper through the surface of its first layer which contained the polyethylene fibrils, so as to cause the thermo-adhesion of this layer to the tips of the corrugated medium.

A second sheet of the two-layered paper previously prepared was heated up to 180°C in a hot-air tunnel and then calendered under a pressure of about 80 kg/sq.cm, cooled down and then continuously fed, as a second liner, to a hot plate device together with the complex formed by the corrugated medium and the first liner, coming from the corrugating unit.

The second liner was fed to the hot plates with the surface of the first layer, containing the polyethylene fibrils, facing the tips of the corrugated medium/1st liner complex, on which tips it must rest.

Before entering the hot plates, onto this surface was deposited a continuous film, fed from a reel and having a thickness of 20 $\mu$, and a width equal to that of the paper sheets, the film consisting of a low-density polyethylene (density=0.906), having the following characteristics:

| | |
|---|---|
| —melting temperature: | 110°C |
| —viscosity, measured in the temperature range of from 120° to 155°C, in a capillary viscosimeter, under a velocity gradient equal to or less than $10^{-1}$ seconds: | less than 0.8×10⁵ poises |

—surface tension equal to that of the high-density polyethylene forming the fibrils present in the sheets, measured at the same temperature

—solubility parameter in a ratio of 0.98 to that of the polyethylene that forms the above indicated fibrils, at 25°C.

The heating section of the hot plates was 10 mt long and was heated by means of over-heated steam at a temperature of 160°C.

The second liner, with the polyethylene film resting on its surface, and the corrugated medium/1st liner complex were fed to the hot plates at a rate of 60 mt/minute, with a dwell time in the heating section of 6 seconds. The maximum temperature observed by an optical pyrometer on the inner face of the second liner, in correspondence with the contact or rest points of the tips of the corrugated medium on that face, was 135°C.

The pressure exerted in correspondence with these points by the rollers of the heating device was 40 g/sq. cm.

At the outlet of the cooling zone, the cardboard thus obtained had a total thickness of 5 mm, and all its waves had a regular and unaltered shape.

The value of the adhesion of the second liner onto the corrugated medium, as a mean value of determinations carried out on 10 waves, proved to be 600 (±150) g/cm.

Example 2 (comparative)

Example 1 was repeated, except that between the second liner and the corrugated medium no polyethylene film (or film of any other polymer) was inserted.

No adhesion of the second liner to the corrugated medium was obtained.

Example 3 (comparative)

Example 1 was repeated, except that no polyethylene film (or film of any other polymer) was

# 0 044 617

inserted between the second liner and the tips of the corrugated medium, while the hot plates were operated at a maximum temperature, measured on the inner surface of the second liner in correspondence with the points of contact between this surface and the tips of the corrugated medium, of 170°C.

At such a temperature the adhesion was about 50 g/cm while the waves appeared unaltered. This operation was repeated under the same conditions, except that the temperature, instead of being 170°C, was equal to 190°C.

The cardboard thus obtained had a total thickness of 4.2 mm, while all the waves appeared collapsed and heavily deformed.

The value of the adhesion of the second liner onto the corrugated medium, as a mean value of determinations carried out on 10 waves, proved to be 450 (±120) g/cm.

## Claims

1. A process for the preparation of cardboard of the corrugated type, using paper containing thermoplastic synthetic fibres, which comprises effecting thermoadhesion of:

(a) at least one corrugated medium (8) comprising, at each outer layer intended for adhesion, a sheet of fibrous material formed of synthetic fibres of at least one thermoplastic polymer, or of a mixture of such fibres containing up to 95% by weight of cellulose fibres, at least part of the said fibres being in the fusion-bonded state; and

(b) at least one liner (4) comprising, at least at the outer layer intended for adhesion to the tips of the corrugated medium, a sheet of fibrous material formed of synthetic fibres of at least one thermoplastic polymer, or of a mixture of such fibres containing up to 95% by weight of cellulose fibres;

characterized in that the thermo-adhesion is carried out by interposing between the tips of the corrugated medium and the surface of the liner to be adhered a film of at least one synthetic thermoplastic polymer (5) having the following characteristics:

(a) a melting temperature lower than the melting temperature of the at least one thermoplastic polymer or of the mixture of thermoplastic polymers constituting the synthetic fibres present both in the liner and in the corrugated medium;

(b) a viscosity in the molten state of less than $1 \times 10^8$ poises, measured in a capillary viscometer, at a velocity gradient less than or equal to $10^{-1}$ seconds, and at a temperature of from a temperature exceeding by 10°C the melting temperature of such polymer to a temperature exceeding by 20°C the melting temperature of the at least one thermoplastic polymer or of the mixture of thermoplastic polymers constituting the synthetic fibres present both in the liner and in the corrugated medium;

(c) a surface tension not exceeding by more than 5 dynes/cm the surface tension of the at least one thermoplastic polymer or of the mixture of thermoplastic polymers constituting the synthetic fibres present both in the liner and in the corrugated medium, measured at the same temperature;

(d) a solubility parameter measured at a temperature of 25°C which is in a ratio to the solubility parameter of the at least one thermoplastic polymer or of the mixture of thermoplastic polymers constituting the synthetic fibres present both in the liner and in the corrugated medium of from 0.85:1 to 1.15:1, extremes included;

and in that the assembly thus obtained, at least in correspondence with the points of contact of the liner with the tips of the corrugated medium, is heated at a temperature of from a temperature exceeding by 10°C the melting temperature of the thermoplastic polymer constituting the film to a temperature exceeding by 20°C the melting temperature of the at least one thermoplastic polymer or of the mixture of thermoplastic polymers constituting the synthetic fibres present both in the liner and in the corrugated medium.

2. A process as claimed in Claim 1, characterized in that the temperature at which the heating is carried out is from a temperature exceeding by 10°C the melting temperature of the thermoplastic polymer constituting the film (5) to the melting temperature of the at least one thermoplastic polymer or of the mixture of thermoplastic polymers constituting the synthetic fibres present both in the liner (4) and in the corrugated medium (8) when the melting temperature of the polymer constituting the film is lower by at least 10°C than the melting temperature of the polymer constituting the fibres.

3. A process as claimed in Claim 1 or 2, characterized in that the synthetic fibres are at least partly in the form of fibrils having a surface area of at least 1 m²/g.

4. A process as claimed in any of Claims 1 to 3, characterized in that the viscosity in the molten state of the thermoplastic polymer constituting the film (5) is less than $1 \times 10^5$ poises.

5. A process as claimed in any of Claims 1 to 4, characterized in that the thermoplastic polymer constituting the film (5) is polyethylene.

6. A process as claimed in any of Claims 1 to 5, characterized in that the thermoplastic polymer constituting the film (5) is low-density polyethylene, and in that the synthetic fibres present in the liner (4) and in the corrugated medium (8) are high-density polyethylene fibrils having a surface area of at least 1 m²/g.

7. A process as claimed in Claim 6, characterized in that the heating is carried out at a temperature of from 120° to 135°C.

8. A process as claimed in any of Claims 1 to 5, characterized in that the thermoplastic polymer constituting the film (5) is high-density polyethylene, and in that the synthetic fibres present in the liner (4) and in the corrugated medium (8) are polypropylene fibrils having a surface area of at least 1 m²/g.

9. A process as claimed in Claim 8, characterized in that the heating is carried out at a temperature of from 145°C to 165°C.

10. A process as claimed in any of Claims 1 to 9, characterized in that the thermo-adhesion of the liner (4) to the tips of the corrugated medium (8) is carried out by means of hot plates (6).

**Revendications**

1. Un procédé de préparation d'un carton du type ondulé utilisant du papier contenant des fibres synthétiques thermoplastiques consistant à effectuer la thermo-adhésion de:

(a) au moins un milieu ondulé (8) comprenant, à chaque couche extérieure destinée à l'adhésion, une feuille de matériau fibreux formé de fibres synthétiques d'au moins un polymère thermoplastique ou d'un mélange de ces fibres contenant jusqu'à 95% en poids de fibres cellulosiques, au moins une partie de ces fibres étant à l'état lié par fusion; et

(b) au moins une doublure (4) comprenant, au moins sur une couche extérieure destinée à l'adhésion aux pointes du milieu ondulé, une feuille de matériau fibreux formé de fibres synthétiques d'au moins un polymère thermoplastique, ou d'un mélange de ces fibres contenant jusqu'à 95% en poids de fibres cellulosiques;

caractérisé en ce que l'on effectue la thermo-adhésion en interposant entre les pointes du milieu ondulé et la surface de la doublure qui doit y adhérer un film d'au moins un polymère thermoplastique synthétique (5) ayant les caractéristiques suivantes:

(a) une température de fusion inférieure à la température de fusion d'au moins le polymère thermoplastique ou du mélange de polymères thermoplastiques constituant les fibres synthétiques présentes à la fois dans la doublure et dans le milieu ondulé;

(b) une viscositié à l'état fondu inférieure à $1 \times 10^8$ poises, mesurée dans un viscosimètre capillaire, à un gradient de vitesse inférieur à ou égal à $10^{-1}$ seconde, et à une température allant d'une température dépassant de 10°C la température de fusion de ce polymère jusqu'à une température dépassant de 20°C la température de fusion d'au moins le polymére thermoplastique ou du mélange de polymères thermoplastiques constituant les fibres synthétiques présentes à la fois dans la doublure et dans le milieu ondulé;

(c) une tension superficielle ne dépassant pas de plus de 5 dynes/cm la tension superficielle d'au moins le polymère thermoplastique ou le mélange de polymères thermoplastiques constituant les fibres synthétiques présentes à la fois dans la doublure et dans le milieu ondulé, mesurée à la même température;

(d) un paramètre de solubilité mesuré à une température de 25°C qui est dans un rapport rapporté au paramètre de solubilité d'au moins le polymère thermoplastique ou du mélange de polymères thermoplastiques constituant les fibres synthétiques présentes à la fois dans la doublure et dans le milieu ondulé, de 0,85/1 à 1,15/1, bornes comprises;

et en ce que l'ensemble ainsi obtenu, au moins en correspondance avec les points de contact de la doublure avec les pointes du milieu ondulé, est chauffé à une température allant d'une température dépassant de 10°C la température de fusion du polymère thermoplastique constituant le film jsuqu'à une température dépassant de 20°C la température de fusion d'au moins le polymère thermoplastique ou du mélange de polymères thermoplastiques constituant les fibres synthétiques présentes à la fois dans la doublure et dans le milieu ondulé.

2. Un procédé selon la revendication 1, caractérisé en ce que la température à laquelle le chauffage est mis en oeuvre va d'une température dépassant de 10°C la température de fusion du polymère thermoplastique constituant le film (5) jusqu'à la température de fusion d'au moins le polymère thermoplastique ou du mélange de polymères thermoplastiques constituant les fibres synthétiques présentes à la fois dans la doublure (4) et dans le milieu ondulé (8) lorsque la température de fusion du polymère constituant le film est inférieure d'au moins 10°C à la température de fusion du . polymère constituant les fibres.

3. Un procédé selon les revendications 1 ou 2, caractérisé en ce que les fibres synthétiques ont au moins partiellement la forme de fibrilles ayant une surface spécifique d'au moins 1 m²/g.

4. Un procédé selon l'une quelconque des revendications 1 à 3, caractérisé en ce que la viscosité à l'état fondu du polymère thermoplastique constituant le film (5) est inférieure à $1 \times 10^5$ poises.

5. Un procédé selon l'une quelconque des revendications 1 à 4, caractérisé en ce que le polymère thermoplastique constituant le film (5) est le polyéthylène.

6. Un procédé selon l'une quelconque des revendications 1 à 5, caractérisé en ce que le polymère thermoplastique constituant le film (5) est du polyéthylène basse densité et en ce que les fibres synthétiques présentes dans la doublure (4) et dans le milieu ondulé (8) sont des fibrilles de polyéthylène haute densité ayant une surface spécifique d'au moins 1 m²/g.

7. Un procédé selon la revendication 6, caractérisé en ce que le chauffage est mis en oeuvre à une température de 120° à 135°C.

8. Un procédé selon l'une quelconque des revendications 1 à 5, caractérisé en ce que le polymère thermoplastique constituant le film (5) est un polyéthylène haute densité et en ce que les fibres synthétiques présentes dans la doublure (4) et dans le milieu ondulé (8) sont des fibrilles de polypropylène ayant une surface spécifique d'au moins 1 m²/g.

9. Un procédé selon la revendication 8, caractérisé en ce que le chauffage est mis en oeuvre à une température de 145°C à 165°C.

10. Un procédé selon l'une quelconque des revendications 1 à 9, caractérisé en ce que la thermo-adhésion de la doublure (4) aux pointes du milieu ondulé (8) est effectuée au moyen de plaques chaudes (6).

**Patentansprüche**

1. Verfahren zur Herstellung von Kartonmaterial von der Art der Wellpappe unter Verwendung von Papier, das thermoplastische synthetische Fasern enthält, welches die Anwendung von Thermo-Adhäsion umfaßt von:

(a) wenigstens einem gewellten Medium (8), welches an jeder äußeren Schicht, die zur Haftung bestimmt ist, eine Bahn eines Fasermaterials aus synthetischen Fasern aus mindestens einem thermoplastischem Polymer oder einer Mischung solcher Fasern die bis zu 95 Gew.-% Zellulosefasern enthält, umfaßt, wobei wenigstens ein Teil der genannten Fasern durch Schmelzen verbunden sind und

(b) wenigstens einer Bahn (4), welche wenigstens an der äußeren Schicht, die zur Haftung an den Spitzen des gewellten Madiums vorgesehen ist, eine Bahn eines Fasermaterials aus synthetischen Fasern aus wenigstens einem thermoplastischen Polymer oder einer Mischung solcher Fasern, die bis zu 95 Gew.-% Zellulosefasern enthält, umfaßt;

dadurch gekennzeichnet, daß die Thermo-Adhäsion durchgeführt wird, indem zwischen den Spitzen des gewellten Mediums und der Oberfläche der anzuhaftenden Bahn eine Folie aus wenigstens einem synthetischen thermoplastischen Polymer (5) eingefügt wird, welches die folgenden Eigenschaften besitzt:

(a) eine Schmelztemperatur, die geringer ist als jene von dem wenigstens einen thermoplastischen Polymer oder der Mischung der thermoplastischen Polymer, die die synthetischen Fasern bilden, die sowohl in der Bahn als auch in dem gewellten Medium vorhanden sind;

(b) eine Viskosität im geschmolzenen Zustand von weniger als $1 \times 10^8$ Poise, gemessen in einem Kapillar-Viscosimeter, bei einem Geschwindigkeits-Gradienten von weniger oder gleich $10^{-1}$ Sek., und bei unter Temperatur im Bereich zwischen der Temperatur, die die Schmelztemperatur eines solchen Polymers um 10°C übersteigt und einer Temperatur, die die Schmelztemperatur von dem wenigstens einen thermoplastischen Polymer oder der Mischung der thermoplastischen Polymeren, die sowohl in der Bahn als auch in dem gewellten Medium vorhanden sind, um 20°C übersteigt;

(c) eine Oberflächenspannung, die jene des wenigstens einen thermoplastischen Polymers oder der Mischung der thermoplastischen Polymeren, die die synthetischen Fasern bildern, die sowohl in der Bahn als auch in dem gewellten Medium vorhanden sind, um nicht mehr als 5 Dynes/cm übersteigt, wobei bei der gleichen Temperatur gemessen wird;

(d) einen Löslichkeitsparameter, gemessen bei einer Temperatur von 25°C, dessen Verhältnis zu dem Löslichkeitsparameter des wenigstens einen thermoplastischen Polymers oder der Mischung der thermoplastischen Polymeren, die die synthetischen Fasern bilden, die sowohl in der Bahn als auch in dem gewellten Medium anwesend sind, von 0,85:1 bis 1,15:1 die Extremwerte eingeschlossen, beträgt;

und wobei das so erhaltene Gefüge, zumindest den Kontaktpunkten der Bahn mit den Spitzen des gewellten Mediums entsprechend, auf eine Temperatur zwischen einer Temperatur, die die Schmelztemperatur des thermoplastischen Polymers, das die Folie bildet, um 10°C übersteigt, und einer Temperatur, die die Schmelztemperatur von dem wenigstens einen thermoplastischen Polymer oder

# 0 044 617

der Mischung der thermoplastischen Polymeren, die die synthetischen Fasern bilden, die sowohl in der Bahn als auch in dem gewellten Medium anwesend sind, um 20°C übersteigt, erhitzt wird.

2. Verfahren nach Anspruch 1, dadurch gekennzeichnet, daß die Temperatur, auf welche das Erhitzen erfolgt zwischen der Temperatur, die die Schmelztemperatur des thermoplastischen Polymers, das die Folie (5) bildet, um 10°C übersteigt, und der Schmelztemperatur von dem wenigstens einen thermoplastischen Polymer oder der Mischung der thermoplastischen Polymeren, die die synthetischen Fasern bilden, die sowohl in der Bahn (4) als auch in dem gewellten Medium (8) vorhanden sind, liegt, wenn die Schmelztemperatur des Polymers, das die Folie bildet, um wenigstens 10°C niedriger ist als die Schmelztemperatur des Polymers, das die Fasern bildet.

3. Verfahren nach Anspruch 1 oder 2, dadurch gekennzeichnet, daß die synthetischen Fasern wenigstens teilweise in Form von Fibrillen vorhanden sind, die eine Oberfläche von wenigstens 1 m²/g aufweisen.

4. Verfahren nach einem der Ansprüche 1 bis 3, dadurch gekennzeichnet, daß die Viskosität das thermoplastischen Polymers, das die Folie (5) bildet, im geschmolzenen Zustand weniger als $1 \times 10^5$ Poise ist.

5. Verfahren nach einem der Ansprüche 1 bis 4, dadurch gekennzeichnet, daß das thermoplastische Polymer, das die Folie (5) bildet, Polyethylene ist.

6. Verfahren nach einem der Ansprüche 1 bis 5, dadurch gekennzeichnet, daß das thermoplastische Polymer, das die Folie (5) bildet, ein Polyethylen von geringer Dichte ist, und daß die synthetischen Fasern, die in der Bahn (4) und in dem gewellten Medium (8) vorhanden sind, Polyethylen-Fibrillen von hoher Dichte mit einer Oberfläche von wenigstens 1 m²/g sind.

7. Verfahren nach Anspruch 6, dadurch gekennzeichnet, daß das Erhitzen bei einer Temperatur von 120°C bis 135°C erfolgt.

8. Verfahren nach einem der Ansprüche 1 bis 5, dadurch gekennzeichnet, daß das thermoplastische Polymer, das die Folie (5) bildet, ein Polyethylen von hoher Dichte ist, und daß die synthetischen Fasern, die in der Bahn (4) und in dem gewellten Medium (8) vorhanden sind, Polypropylen-Fibrillen mit einer Oberfläche von wenigstens 1 m²/g sind.

9. Verfahren nach Anspruch 8, dadurch gekennzeichnet, daß das Erhitzen bei einer Temperatur von 145°C bis 165°C erfolgt.

10. Verfahren nach einem der Ansprüche 1 bis 9, dadurch gekennzeichnet, daß die Thermo-Adhäsion der Bahn (4) an den Spitzen gewellten Mediums (8) mit Hilfe von heißen Platten (6) durchgeführt wird.

Fig. I

Fig. II

Fig. III